## Europäisches Patentamt
## European Patent Office
## Office européen des brevets

(19)

(11) Veröffentlichungsnummer: **0 053 094**
A2

(12) **EUROPÄISCHE PATENTANMELDUNG**

(21) Anmeldenummer: **81810448.1**

(22) Anmeldetag: **11.11.81**

(51) Int. Cl.³: **B 01 D 21/00**
B 01 D 19/00, C 02 F 1/00

(30) Priorität: **26.11.80 CH 8760/80**

(43) Veröffentlichungstag der Anmeldung:
**02.06.82 Patentblatt 82/22**

(84) Benannte Vertragsstaaten:
**AT BE CH DE FR GB IT LI LU NL SE**

(71) Anmelder: **Schelling, Mario**
**Weidstrasse 629**
**CH-8913 Ottenbach(CH)**

(71) Anmelder: **Schelling, Bruno**
**Stationsstrasse 7**
**CH-8907 Wettswil(CH)**

(71) Anmelder: **Schelling, Armin**
**Stationsstrasse 7**
**CH-8907 Wettswil(CH)**

(72) Erfinder: **Schelling, Mario**
**Weidstrasse 629**
**CH-8913 Ottenbach(CH)**

(72) Erfinder: **Schelling, Bruno**
**Stationsstrasse 7**
**CH-8907 Wettswil(CH)**

(72) Erfinder: **Schelling, Armin**
**Stationsstrasse 7**
**CH-8907 Wettswil(CH)**

(74) Vertreter: **Schmid, Rudolf et al,**
**c/o ISLER & SCHMID Patentanwaltsbureau**
**Walchestrasse 23**
**CH-8006 Zürich(CH)**

(54) Verfahren und Vorrichtung zur Ausscheidung von festen teilchenförmigen Materialien aus ihrer Mischung mit Flüssigkeit sowie von Gasen aus derartigen Mischungen und Anwendung des Verfahrens.

(57) Diese Vorrichtung bestehend aus einem Behälter (10) mit einer zylindrischen Wandung (11) und einer kegelförmigen, mit der Kegelspitze (13) nach unten gerichtete, Wandung (12) ist oben mit Einlaufmitteln (20) für Wasser und mit Ablaufmitteln (12, 14) für feste Stoffe und Klarwasser sowie mit Abgabemitteln (22) für Gas versehen. An einer zentralen Halterung (30) befindet sich ein Schwingungsgeber (31) mit vier kreuzweise angeordneten Pleuelstangen (32a bis 32d) und an diesen starr befestigte Schwingungsplatten (33a bis 33c). Das in den Behälter (10) eingeleitete Abwasser wird mit diesen Schwingungsplatten einer Vibration ausgesetzt. Dadurch fallen sämtliche Feststoffe nach unten und oben kann Klarwasser abgenommen werden. Vorteilhaft ist, dass die aufzubringende Energie vergleichsweise niedrig ist.

Fig. 1

0053094

MARIO S C H E L L I N G
CH-8913 O t t e n b a c h

BRUNO S C H E L L I N G
CH-8907 W e t t s w i l

ARMIN S C H E L L I N G
CH-8907 W e t t s w i l

---

Verfahren und Vorrichtung zur Ausscheidung von festen teilchenförmigen Materialien aus ihrer Mischung mit Flüssigkeit sowie von Gasen aus derartigen Mischungen und Anwendung des Verfahrens

---

Die vorliegende Erfindung betrifft ein Verfahren zur Ausscheidung von festen teilchenförmigen Materialien aus ihrer Mischung mit Flüssigkeit sowie von Gasen aus derartigen Mischungen gemäss dem Oberbegriff des unabhängigen Patentanspruches 1. Ferner betrifft die Erfindung noch eine Vorrichtung zur Durchführung des Verfahrens gemäss dem Oberbegriff des unabhängigen Patentanspruches 5 und eine Anwendung des Verfahrens gemäss dem Oberbegriff des unabhängigen Patentanspruches 10.

2

Derartige Mischungen sind meistens in Abwässern aus Haushaltungen enthalten. Zur Reinigung des Abwassers werden mittels Rechen, Sandfängen und/oder Absetzbecken die suspendierten Stoffe abgetrennt. Mittels Rechen werden dabei die sperrigen Güter, wie Holz, Lappen und dergleichen, zurückgehalten. An solche Rechen können Stromklassierer in Form weiterer Rechen oder Siebe anschliessen, um das Abwasser von den feinstmöglichen Partikeln zu säubern. In verschiedenen Fällen wird das grob gereinigte Abwasser einem Absetzteich zugeführt, wo die Partikeln durch die Schwerkraft absinken können. Vielfach findet in diesen Absetzteichen auch eine biologische Reinigung zur Entfernung gelöster, organischer Substanzen statt. Da diese biologische Reinigung eine gewisse Zeit in Anspruch nimmt, besteht im allgemeinen genügend Zeit, um in grossen Absetzbecken auch die festen Bestandteile sich, bis zu einem Feststoffgehalt von 30 %, absetzen zu lassen. Da bekanntlich neben diesen beiden genannten Verunreinigungsarten auch nicht-absetzbare Schwebstoffe und kolloidal gelöste Substanzen in den Abwässern enthalten sind, müssen noch Neutralisations- und Flockungsverfahren eingesetzt werden. Diese werden beispielsweise in einem Cyclator durchgeführt.

Es ist jedem Fachmann bekannt, dass Anlagen zur Klärung von Abwässern grosse Gebiete in Anspruch nehmen müssen, um die grossen Wassermengen mit bis 250 Liter Wasser pro Kopf täglich zu verarbeiten und den Gewässern nur Reinwasser zuzuführen. Dazu müssen oftmals neue Anlagen in grösserer Entfernung der Siedlungsgebiete neu erstellt werden, weil der Platz der vorhandenen Kläranlagen in den Nahgebieten nicht ausreicht um die Anlagen der gewachsenen Bevölkerung entsprechend zu vergrössern. Vielfach wird dann, wie bekannt ist, die die Kapazität übersteigende Abwassermenge nach der mechanischen Grobreinigung direkt in die Gewässer geleitet und nur der verarbeitbare Teil geklärt.

Es ist eine Aufgabe der Erfindung Mittel zur Ausscheidung von festen teilchenförmigen Materialien aus Flüssigkeiten zu schaffen, durch das sich eine rasche Abwasserreinigung bewirken lässt und die auf vergleichsmässig kleiner Fläche aufbaubar ist, um neben einer bestehenden Kläranlage das aus dem Mehrverbrauch herrührende Abwasser zu reinigen oder der bestehenden Kläranlage wenigstens schon weitgehend von bestimmten Materialien befreites Abwasser zuzuführen, um die Durchlaufzeit zu beschleunigen, oder anstelle von Kläranlagen das gesamte Abwasser sowohl von fremden Flüssigkeiten, festen Partikeln, als auch durch Flockung ausgefällter, kolloidaler Lösungen und/oder organischen Stoffen zu befreien.

Das Verfahren zur Erfüllung dieser Aufgabe ist durch die Merkmale im kennzeichnenden Teil des unabhängigen Patentanspruches 1 gekennzeichnet. Die Vorrichtung zur Durchführung des Verfahrens zeichnet sich durch die Merkmale im kennzeichnenden Teil des unabhängigen Patentanspruches 5 aus und die Anwendung des Verfahrens geschieht nach den Merkmalen des unabhängigen Patentanspruches 10.

Ein Ausführungsbeispiel der Erfindung wird nachfolgend an Hand der Zeichnung näher erläutert. Es zeigen :

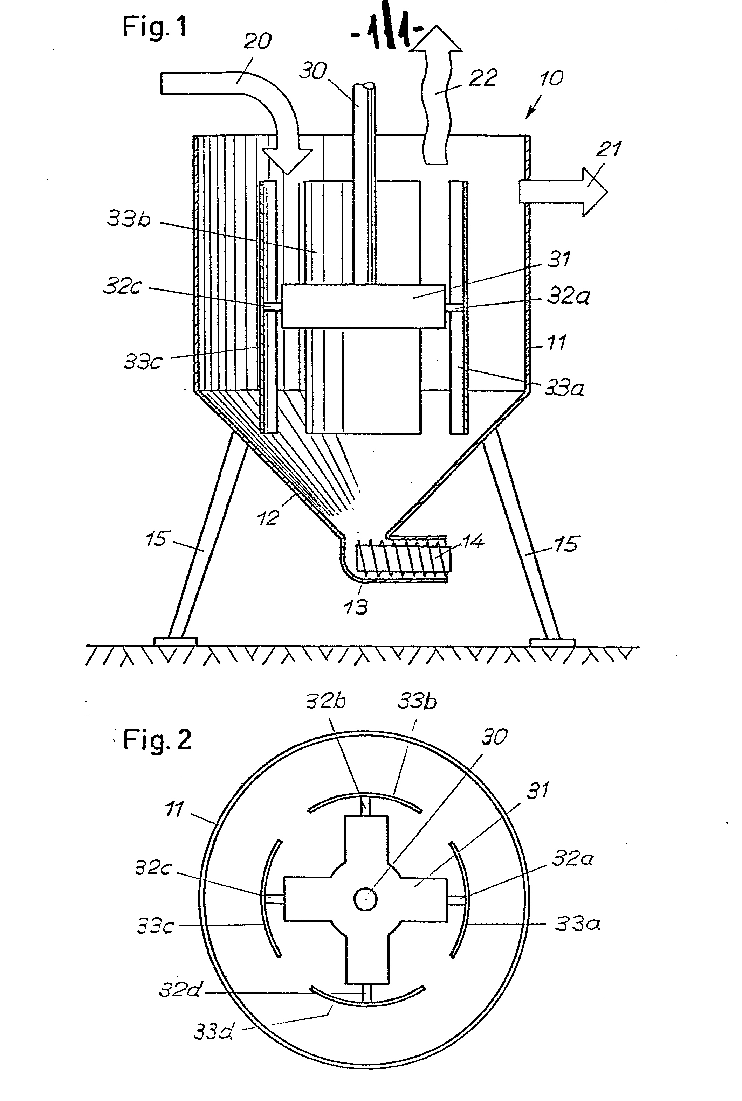

Fig. 1 eine Schnittansicht einer Vorrichtung zur Ausscheidung von festen teilchenförmigen Materialien sowie von Gasen aus Flüssigkeit; und

Fig. 2 einen Grundriss der Vorrichtung nach Fig. 1.

Ein Behälter 10 besteht im oberen Teil aus einer zylindrischen Wandung 11 und im unteren Teil aus einer an diese anschliessende kegelförmige Wandung 12. An der Spitze der kegelförmigen Wandung 12 ist ein Ablaufmittel 13 angeordnet, in dem die auf den Grund absinkenden Materialien, wie Feststoffe und/oder Flüssigkeit, mit grösserem spezifischem Gewicht, durch eine Förderschnecke 14 herausgefördert werden. Der Behälter 10 ist auf Stützen 15 gestellt. In der oberen Partie sind mit Pfeilen 20, 21, 22 die Fliessrichtungen für den Einlauf 20 für Abwasser, Ablauf 21 für Klarwasser und Abgasweg 22 ür die ausgetriebenen Gase darstellt.

An einer Halterung 30, die vorzugsweise rohrförmig ausgebildet ist, ist ein Schwingungsgeber 31 befestigt und die Ansteuerung dieses Schwingungsgebers kann elektrisch, mechanisch oder hydraulisch sein. Solche Schwingungsgeber sind in der Technik gut bekannt und müssen deshalb hier, da deren genaue Ausbildung für die Erfindung nicht wesentlich ist, auch nicht bis in alle Details beschrieben werden. Wesentlich ist nur, dass an vier kreuzweise angeordneten Schwingungspleuelstangen 32a bis 32d je die sich gegenüberliegenden Schwingungspleuelstangen 32a, 32c und 32b, 32d je im Gleichtakt arbeiten, das heisst, zusammen entweder gegen das Zentrum zu oder von diesem weg bewegt werden, und dass benachbarte Schwingungspleuelstangen, z.B. 32a, 32b und 32c, 32d im Gegentakt arbeiten, d.h., wenn die eine Pleuelstange gegen das Zentrum hin bewegt wird, die andere Pleuelstange von diesem weg bewegt wird.

Der Sinn dieser Massnahmen ist darin zu finden, dass die Flüssigkeiten praktisch inkompressibel sind, und wenn zum Beispiel die an den Pleuelstangen 32a, 32c befestigten Schwingungsplatten 33a, 33c zum Zentrieren hin bewegt werden, die Schwingungsplatten 33b, 33d um ein gleiches Stück den Abstand vergrössern müssen, damit der durch die Schwingungsplatten 33a bis 33d eingeschlossene Raum gleich gross bleibt. Die Schwingungsgeber 31 müssen jedoch in der Lage sein, die Pleuelstangen im Frequenzbereich zwischen 20 und 125 Hz zu bewegen. In besonderen Fällen könnte auch eine Frequenz bei 5000 Hz vorteilhaft sein. Die genannten Schwingungsplatten 33a bis 33d sind wenigstens angenähert in ihrer Mitte mit den Pleuelstangen 32a bis 32d starr verbunden, z.B. gelötet oder geschweisst. Sie haben Abmessungen, derart, dass die unteren Enden der Platten bis in den kegelförmigen Teil hinein und die oberen Enden bis zum Flüssigkeitsspiegel reichen. Für die vorgesehene Anwendung zur Klärung von Abwasser sind die Platten 4 bis 5 mm dick und sie schliessen einen Kreis innerhalb des Behälters 10 ein, wobei die Abstände zwischen jeweils zwei benachbarten Platten kleiner sind als die Breite der einzelnen Platten. Der Abstand zwischen der Behälterwand und den Platten entspricht wenigstens angenähert der Wellenlänge einer Schwingung und
kann beispielsweise 35 cm betragen was einer Grundschwingung von rund 1000 Hz entsprechen würde oder entsprechend harmonischen Schwingungen von 500, 250,
125 Hz, usw. Der durch die Platten ausgeführte Hub liegt
in der Grössenordnung von wenigstens 2 mm.

Mit einer derartigen Anordnung kann bei einem
Energieaufwand von höchstens 10 kW erreicht werden, dass
aus Abwasser alle Feststoffe inklusive der Schwebstoffe
und allenfalls der flockulierten Beimengungen in den kegelförmigen Teil 12 des Behälters 10 fallen. Somit kann am
Ablauf 13 sämtliches als Feststoff zu betrachtendes Material abgenommen werden, am Auslauf kann entweder die gesamte Flüssigkeit abgelassen werden, oder es können Wasser und leichtere, bzw. schwerere Flüssigkeiten in unterschiedlichen Höhen abgezogen werden.

Es hat sich gezeigt, dass die verarbeitbare
Menge Abwasser bei einem Behälter von 2 m Durchmesser
und 2,5 m Höhe dem gesamten Abwasser von bis zu 10'000
Personeneinheiten à 250 Liter Abwasser täglich entspricht.
Somit kann die biologische und allenfalls notwendige
chemische Stufe von sämtlichen Stoffen befreit werden,
die als Partikeln oder als flockulierte Masse ausscheidbar
sind.

8

MARIO S C H E L L I N G
CH-8913 O t t e n b a c h

BRUNO S C H E L L I N G
CH-8907 W e t t s w i l

ARMIN S C H E L L I N G
CH-8907 W e t t s w i l

P a t e n t a n s p r ü c h e
-----------------------------------

1. Verfahren zur Ausscheidung von festem teilchenförmigen Materialien aus ihrer Mischung mit Flüssigkeit sowie von Gasen aus derartigen Mischungen und/oder gemischte Flüssigkeiten auf Grund ihres spezifischen Gewichtes, dadurch gekennzeichnet, dass die Mischung in einen Behälter eingeleitet und in diesem Behälter einer Vibration ausgesetzt wird.

2. Verfahren nach Patentanspruch 1, dadurch gekennzeichnet, dass die Vibration aus Schwingungen unterschiedlicher Frequenz erzeugt wird.

3. Verfahren nach Patentanspruch 1, dadurch gekennzeichnet, dass die Vibration aus der Schwingung mit einer Grundfrequenz erzeugt wird.

4. Verfahren nach Patentanspruch 2, dadurch gekennzeichnet, dass die Schwingungen unterschiedlicher Frequenzen aus der Schwingung mit wenigstens einer Grundfrequenz und mehrerer ihrer harmonischen Schwingungen zusammengesetzt sind.

5. Vorrichtung zur Ausübung des Verfahrens nach Patentanspruch 1, dadurch gekennzeichnet, dass in einem Behälter mit Einlaufmitteln für die Mischung, mit Ablaufmitteln für Flüssigkeit und festen Materialien eine Vibratoranordnung vorhanden ist, welche Vibratoranordnung wenigstens eine freistehende Platte mit in vertikaler Richtung verlaufender Längsausdehnung aufweist und ein Vibratorantrieb die Platte wenigstens angenähert mittig in ihrer Lage festhält, um die Vibrationen auf diese zu übertragen.

6. Vorrichtung nach Patentanspruch 5, dadurch gekennzeichnet, dass der Behälter im oberen Teil zylindrisch und in einem unteren Teil umgekehrt kegelförmig ausgebildet ist, dass die Einlaufmittel oben in den zylindrischen Teil eingeführt sind und wenigstens ein Ablaufmittel an der Spitze des Kegels angeordnet ist.

7. Vorrichtung nach Patentanspruch 5, dadurch gekennzeichnet, dass sich die Platte über wenigstens den zylindrischen Teil bis zur Höhe der Ablaufmittel für Flüssigkeit bis zur Verbindungsstelle zwischen zylindrischem und kegelförmigem Teil erstreckt.

8. Vorrichtung nach einem der Patentansprüche 5 bis 7, dadurch gekennzeichnet, dass vier Platten mit kreissegmentförmigem Grundriss in einem Kreis angeordnet sind, und dass zwischen je zwei benachbarten Platten ein geringerer Abstand besteht als die Breite jeder Platte ist.

9. Vorrichtung nach Patentanspruch 8, dadurch gekennzeichnet, dass der Abstand zwischen der Platte und der zylindrischen Behälterwand wenigstens angenähert einer Wellenlänge einer Schwingung der Vibration entspricht.

10. Vorrichtung nach einem der Patentansprüche 1 bis 9, dadurch gekennzeichnet, dass im Behälter über der Flüssigkeit ein Ueberdruck herrscht.

11. Anwendung des Verfahrens für die Abwasserreinigung, indem das Abwasser nach der mechanischen Reinigung mittels Rechen durch die Einlaufmittel in den Behälter eingeführt und das gereinigte Wasser durch die Ablaufmittel abgeführt wird und das feste Material mit dem Ablaufmittel an der Spitze des Kegels aus dem Behälter entnommen wird.

Fig.1

Fig.2